# EUROPÄISCHE PATENTSCHRIFT

(11) **EP 0 864 972 B1**
(45) Veröffentlichungstag und Bekanntmachung des Hinweises auf die Patenterteilung: **26.11.2003**
(21) Anmeldenummer: 98101324.6
(22) Anmeldetag: 26.01.1998
(51) Int. Cl.: G06F 9/44

(54) **Parameteraktualisierungsverfahren**
Parameter updating method
Procédé de mise à jour de paramètres

(30) Priorität: 12.03.1997 DE 19710250
(43) Veröffentlichungstag der Anmeldung: 16.09.1998
(73) Patentinhaber: Siemens Nixdorf Informationssysteme AG, 33106 Paderborn (DE)
(72) Erfinder: Ruckmann, Peter, Dr., 33106 Paderborn (DE); Manske, Detlef, 33102 Paderborn (DE); Frerich, Stefan, 33098 Paderborn (DE)
(74) Vertreter: Berg, Peter, Dipl.-Ing.

(56) Entgegenhaltungen:
- EP-A- 0 284 924
- "CHANGING SYSTEM CONFIGURATION FOR SHARED WINDOWS APPLICATIONS" IBM TECHNICAL DISCLOSURE BULLETIN, Bd. 37, Nr. 2B, 1.Februar 1994, Seite 505/506 XP000433927
- "METHOD FOR ENABLING SOFTWARE UPDATES THROUGH THE INTERNET" IBM TECHNICAL DISCLOSURE BULLETIN, Bd. 40, Nr. 3, März 1997, Seite 123/124 XP000694535

## Beschreibung

### Technisches Gebiet

Die Erfindung betrifft ein Verfahren zur Aktualisierung von Programm-Parametern mittels einer Datennetzwerkverbindung.

### Stand der Technik

Programme in Datenverarbeitungsanlagen benutzen häufig zur Parametrisierung sogenannte Konfigurationsdateien, in denen Parameter für die Ausführung des Programms gespeichert sind.

Beispiele für solche Konfigurationsdateien sind die Dateien mit beispielsweise den Namen ".*.rc" im Stammverzeichnis ('home directory') eines Benutzers eines UNIX-Betriebssystems, die Dateien mit der Endung '.ini', insbesondere die Datei 'win.ini' in der graphischen Oberfläche "Windows 3.x" der Firma Microsoft, welche letztere in dem Betriebssystem "Windows 95" eine eigene Komponente, die 'registry', für die Verwaltung solcher Konfigurationsinformation eingerichtet hat, und im folgenden auch als "Datei", wenn auch mit hierarchischem Zugriffsverfahren, angesehen wird. In beiden letzteren Fällen ist eine Schnittstelle seitens "Windows" vorhanden, um Einträge der INI-Dateien bzw. der Registry zu lesen oder zu schreiben.

Zur Änderung der Konfigurationseinträge dienen entweder im zu konfigurierenden Programm selbst enthaltene Menüs und Formulare, separate Konfigurationsprogramme oder, soweit möglich, auch normale Text-Editoren. In allen diesen Fällen jedoch muß eine Bedienperson ein Ausgabegerät, meist einen Bildschirm, und ein Eingabegerät, meist eine Tastatur oder eine Maus, welche beide direkt und lokal mit dem Rechner verbunden sind, bedienen und die Einträge ändern.

Anwendungen für öffentlichen Zugriff werden häufig mittels eines in ein spezielles Übergehäuse eingebauten Personal Computers mit berührungsempfindlichem Bildschirm bereitgestellt, beispielsweise unter dem Namen "ELEKTRA" von der Siemens Nixdorf Informationssysteme AG erhältlich. Diese Geräte können dann so konfiguriert werden, daß nach dem Einschalten genau eine Anwendung aktiviert wird, die aber, da öffentlich zugänglich, selbstverständlich keine Änderung der Konfigurationsdaten durch einen Benutzer zuläßt. Ist diese doch notwendig, muß durch spezielle Maßnahmen wie dem Aufschließen von Schlössern die Eingabe erlaubt werden und verlangt daher in der Regel die physische Anwesenheit einer Bedienperson. Dies ist jedoch bei einer großen Anzahl von öffentlich zugänglichen Terminals ein erheblicher Aufwand.

In der europäischen Patentanmeldung EP 0 509 945 A2 ist ein Verfahren zur zentralen Verwaltung der auf programmierbaren Arbeitsstationen installierten Software angegeben. Darin wird vorgeschlagen, daß beim Beginn der Kommunikation einer Arbeitsstation mit einem Zentralrechner eine Konfigurationsdatei auf die Arbeitsstation kopiert wird. Ein Programm bearbeitet diese kopierte Konfigurationsdatei, bestimmt, ob Konfigurationsänderungen vorliegen, führt diese gegebenenfalls aus und startet dann das System neu. Diese Lösung erlaubt beispielsweise die Installation und Deinstallation von Programmen und die Änderung von Systemparametern, die in der Regel einen Neustart des Systems erfordern. Für jede Arbeitsstation ein Zentralrechner vorgesehen, auf dem alle Konfigurationsinformation für alle Komponenten der Arbeitsstation gemeinsam verwaltet werden. Fernerhin wird die Konfigurationsdatei jedesmal vollständig übertragen und von dem die Konfigurationsdatei bearbeitenden Programm entschieden, ob eine Aktualisierung notwendig ist. Daher ist auch

Aufgabe der Erfindung ist es, eine einfache Möglichkeit anzugeben, wie ein Anwendungsprogramm beispielsweise in einem Informationsterminal rekonfiguriert werden kann, ohne daß eine mit der Wartung beauftragte Person physisch anwesend sein muß, die Konfigurationsdaten bei jedem Programm- oder Systemstart vollständig übertragen werden oder die Quelle der Konfigurationsdaten allen Anwendungsprogrammen gemeinsam ist.

### Darstellung der Erfindung

Die Erfindung geht von der Erkenntnis aus, das Informationsterminals häufig durch ein Netzwerk mit Server-Rechnern verbunden sind, weil die Anwendungsprogramme die anzuzeigende Informationen durch Netzwerkzugriff erhalten. Nach der Erfindung ermittelt das Anwendungsprogramm per Netzwerkzugriff, ob die Konfigurationsinformationen aktuell sind und überträgt und speichert sie gegebenenfalls. Besondere Vorteile ergeben sich bei Verwendung der HTTP-Protokolle, wie in den folgenden Darstellungen genauer ausgeführt ist.

Insbesondere sind die Server für die Versorgung mit den Parametern pro Programm beliebig einstellbar; insbesondere wenn diese über z.B. einen "Uniform Resource Locator" erfolgt. Insbesondere kann dann auch mit dem Verfahren selbst auf einen anderen Server umgeschaltet werden.

Es handelt sich also um ein Verfahren zur Aktualisierung von in einer lokalen Konfigurationsdatei abgelegten Programmparametern, bei dem bei einem Server angefragt wird, ob eine neue Parameterdatei vorliegt, und diese gegebenenfalls von dem Server übertragen und in die lokale Konfigurationsdatei übernommen wird.

### Kurzbeschreibung der Zeichnungen

Es zeigen
- Fig. 1: eine Parameterdatei als HTML-Dokument im Quellcode, wie es angefordert wird,
- Fig. 2: dasselbe mit einem Browser angezeigt,
- Fig. 3: dasselbe, nachdem es in die Windows95 Registry übernommen wurde.

### Beschreibung einer Ausführungsform der Erfindung

Die Erfindung wird anhand einer Anwendung beschrieben, die unter der graphischen Oberfläche WINDOWS der Firma Microsoft abläuft und über eine Socket-Schnittstelle einen Nachrichtenaustausch über ein TCP/IP-Netzwerk durchführen kann. Als Protokoll wird dabei bevorzugt das "Hyper-Text Transfer Protokoll" benutzt, wie es in dem Dokument RFC 1945 von T. Berners-Lee, R. Fielding, H. Frystyk, May 1996, beschrieben ist. Das HTTP-Protokoll verwendet dabei grundsätzlich ein Anfrage-Antwort-Schema (request-response) an, bei dem ein Client (Klientenprogramm eines Klientenrechners) eine Anfrage sendet und der Server (Dienstprogramm eines Dienstrechners) mit einem Status- oder Returncode antwortet und gegebenenfalls das verlangte Dokument übermittelt. Als Speicher für Parameter werden wahlweise Textdateien (im .ini-Format) oder die hierfür spezialisierte "Registry"-Datenbank verwendet, die durch eine hierarchische Struktur einer Kollektion von Parameterdateien gleichwertig ist.

Bei Installation einer Anwendung, die im folgenden mit "MyApp" bezeichnet sei, wird in einer Parameterdatei unter dem Schlüssel "ParamLocation" zunächst den Netzwerknamen der Parameterdatei, beispielsweise "http://remoteserver.xxx/config/MyApp.htm", sowie das Datum der Installation unter dem Schlüssel "ParamDate" abgelegt. Die Zeichenkette "remote-server.xxx" qualifiziert dabei einen logischen Server nach den Namens- und Aufsuchkonventionen des Internets; insgesamt stell die Adresse der Parameterdatei einen mit URL abgekürzten, als "Uniform Resource Locator" bezeichneten Adresse dar, deren Aufbau beispielsweise dem RFC 1738 von T. Berners-Lee u.a. , Dezember 1994, entnommen werden kann.

Bei nachfolgenden Aufrufen der Anwendung werden die folgenden zum Zwecke der Bezugnahme durchnumerierten Anweisungen aufgerufen:
1. GetProfileString("MyApp", "ParamLocation", pLoc)
2. GetProfileString("MyApp", "ParamDate", pDate)
3. SendHttpRequest( pLoc+" If-Modified-Since:"+pDate)
4. if ReturnCode = 304 then return (* unchanged *)
5. ObtainHttpResponse(someBuffer)
6. ParseAndStoreHtmlParamSpec(someBuffer)

Mit der 1. und 2. Anweisung werde die Netzwerkadresse des Parameter-Servers sowie das Datum der letzten Aktualisierung ermittelt. Hier und im folgenden ist als Datum stets ein Zeitstempel zu verstehen, wie er in Abschnitt 3.3 des RFC 1945 beschrieben sind. Anderer Formen, beispielsweise fortlaufende Versionsnummern, sind gleichfalls möglich, wenn das Netzprotokoll diese unterstützt oder entsprechend erweitert werden kann.

Mit der 3. Anweisung wird eine Anfrage an den Server gestellt, der einerseits den Namen des Dokuments, hier der Parameterdatei, enthält und zudem, wie im Abschnitt 10.9 des RFC 1945 beschrieben, einen Zusatz, welcher den Server auffordert, nur dann das Dokument zu senden, wenn es neuer ist als das mit der Anfrage übermittelte und durch die Zeichenkette "If-Modified-Since" spezifizierte Datum. Ist dies nicht der Fall, so antwortet der Server mit dem Code 304, den der Client im 4. Schritt abfragt. Liegt dieser Fall vor, so ist ein Abgleich der Konfigurationsdatei nicht notwendig, und dieser Teil der Bearbeitung ist abgeschlossen. Ist die im Server gespeicherte Konfigurationsdatei neuer, so wird diese im Rahmen der Antwort übermittelt und wird im 5. Schritt zwischengespeichert, um sodann im 6. Schritt von einem Programmabschnitt analysiert und in die Parameterdatei übertragen zu werden.

Die über das Netzwerk übertragene Konfigurationsdatei ist zweckmäßig in der Sprache HTML abgefaßt, wie sie beispielsweise in dem Dokument RFC 1866, "Hypertext Markup Language - 2.0" von T. Barners-Lee und D. Conolly, November 1995, spezifiziert ist. Dabei ist die Verwendung von Tabellen, die in dem RFC 1942, "HTML Tables", von D. Raggett, May 1996, vorgeschlagen ist, besonders vorteilhaft.

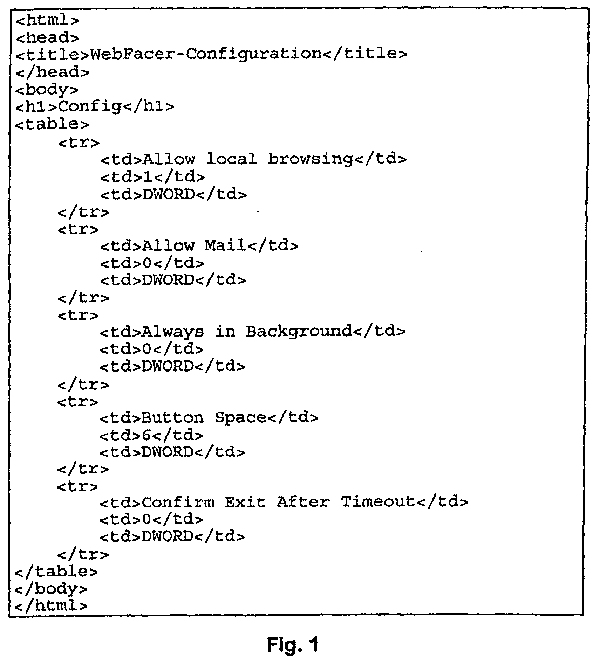

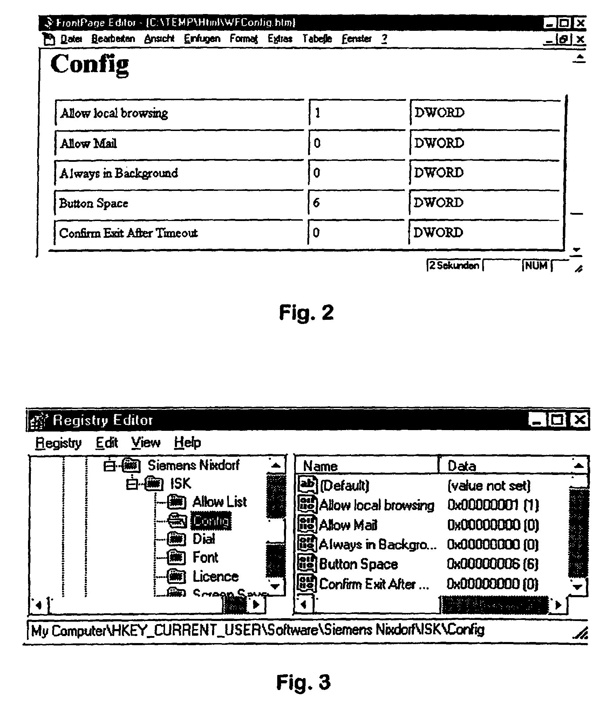

Ein Beispiel für eine solche über das Netzwerk angeforderte Datei ist in Fig. 1 dargestellt. Neben den für ein HTML-Dokument notwendigen Kopf- und Fußzeilen ist eine Tabelle gemäß RFC 1942 , eingeleitet durch "<table>" und abgeschlossen durch "</table>", zu sehen, deren Zeilen durch "<tr>" und "</tr>" eingeschlossen sind und deren Einträge in Spaltenreihenfolge mit "<td>" und "</td>" eingeschlossen sind. Mit einem HTML-Anzeigeprogramm, auch als Browser bezeichnet, ergibt sich in etwa die in Fig. 2 dargestellte Anzeige. Nach der Übernahme in die Windows95 Registry ergibt sind mit dem Verwaltungsprogramm für die Registry beispielsweise das in Fig. 3 gezeigte Bild.

Die Verarbeitung des in Fig. 1 dargestellten HTML-Konfigurationsdatei erfolgt dahingehend, daß die dritte Spalte zur Auswahl der passenden Funktion, d.h. ob der Parameter eine Zahl oder eine Zeichenkette ist, verwendet wird. Also wird aus der Tabellenzeile

| | | |
|---|---|---|
| Allow Mail | 1 | DWORD |

ein Programmaufruf wie

WriteRegistryDword(path+"MyApp", "Allow Mail", 1) wobei in "path" der Pfad in einer hierarchisch organisierten Parameterablage wie der Windows95 Registry steht.
Unter Windows 3.1 würde der Aufruf lauten:
WriteProfileString("MyApp","AllowMail","1")
und unter UNIX in etwa lauten
cf = fopen(strcat(getenv(HOME),".rcMyApp"),"w");
fprintf(cf, "%s = %d\n", "AllowMail", 1);
fclose(cf)
wobei eine Unterstützung für mehrere Parameter der Übersichtlichkeit halber weggelassen wurde.

Da die Netzadresse der Konfigurationsdatei selbst ein Parameter ist, kann durch das Verfahren nach der Erfindung auch dazu verwendet werden, den Server für die Konfigurationsdatei zu verändern. Lediglich muß der bisherige Server eine gewisse Zeit weitergeführt werden, bis mit hoher Wahrscheinlichkeit alle im Netz befindlichen Klienten mindestens einmal aktiviert wurden.

Durch die Verwendung des HTTP-Protokolls ergeben sich besondere Vorteile durch die transparente Pufferung der Dateien. Angenommen, es sind an fünf Standorten je zwanzig Anzeigestationen angeschlossen, die jeweils über eine als "proxy" bezeichnete Relais-Station auf den Zentralrechner zugreifen. Die Relais-Station führt einen Puffer und fragt für jede Anfrage der Anzeigestationen zwar eine Aktualitätsanfrage an den Zentralserver durch, bekommt aber nur bei der ersten Anfrage die geänderte Datei übertragen. Die weiteren neunzehn Anfragen kann die Relais-Station aus ihrem Puffer befriedigen.

In Fig. 1 ist durch "<h1>" und "</h1>" das Wort "Config" als erste Kopfzeile markiert. Dieses wurde dazu verwendet, um bei dem Eintrag in die in Fig. 3 gezeigte Registry das Unterverzeichnis auszuwählen. Da die Kopfzeilen in HTML eine Hierarchie bilden, kann also in einfacher Weise auch eine Hierarchie in der Konfigurationsdatei durch eine Hierarchie in der Parameterdatei, hier in HTML codiert, modelliert werden.

Ein "Uniform Resource Locator" kann auch auf eine Datei auf dem lokalen Rechner, auf dem das Klientenprogramm ausgeführt wird, verweisen, wie in Kap. 3.10 des RFC 1738 dargestellt ist. Damit kann die Parameterdatei auch ohne Netzwerkzugriff verwendet werden. Diese bedeutet einerseits, daß die Parameterdatei mit jedem Programm zur Erstellung von HTML-Texten bearbeitet werden kann und eine getrennte Anwender-Dokumentation für die Einträge in der Konfigurationsdatei entfallen kann. Die Art und Form der Verwendung einer Registry ist damit für den Benutzer vollständig abschirmbar. Zudem kann zu Wartungszwecke auf einfache Art ein Betrieb ohne Netzwerk erreicht werden.

Besonders vorteilhaft ist die Anwendung des Verfahrens bei einer, üblicherweise als "Browser" bezeichneten, Anwendung, deren Aufgabe es ist, in HTML codierte Seiten anzurufen und anzuzeigen, da diese die Schnittstellen für das HTTP-Protokoll enthält.

## Patentansprüche

1. Verfahren zur Aktualisierung von Parametern eines auf einem Klientenrechner auszuführenden Klientenprogramms mit den Merkmalen:
- die Parameter sind in einer lokalen Konfigurationsdatei auf dem Klientenrechner gespeichert,
- die Ausführung des Klientenprogramms umfaßt eine Anfrage über ein Datennetzwerk an ein Dienstprogramm für eine Parameterdatei, wobei in der Anfrage eine Aktualitätsangabe enthalten ist,
- sofern die Auswertung der Aktualitätsangabe durch das Dienstprogramm keine Aktualität ergibt, wird die Parameterdatei an das Klientenprogramm übermittelt, welches daraufhin die erhaltenen Parameter in die eigene Konfigurationsdatei überträgt.

2. Verfahren nach Anspruch 1, wobei als Protokoll das Protokoll HTTP verwendet wird.

3. Verfahren nach Anspruch 2, wobei die über das Netz angeforderte Parameterdatei in der Sprache HTML dargestellt ist.

4. Verfahren nach Anspruch 3, wobei die Parameter als Tabelle formatiert sind.

5. Verfahren nach Anspruch 3, wobei eine Hierarchie in der Konfigurationsdatei durch eine Hierarchie in der Syntax der Parameterdatei dargestellt wird.

6. Verfahren nach einem der Ansprüche 2 bis 5, wobei das Klientenprogramm zur Anzeige von über HTTP übermittelten Dokumenten dient.

## Claims

1. Method for updating parameters for a client program which is to be executed on a client computer, having the following features:
- the parameters are stored in a local configuration file on the client computer,
- execution of the client program comprises a query via a data network to a service program for a parameter file, the query containing a current-status statement,
- if evaluation of the current-status statement by the service program reveals no current status, the parameter file is transmitted to the client program, which then transfers the parameters obtained to its own configuration file.

2. Method according to Claim 1, where the protocol used is the protocol HTTP.

3. Method according to Claim 2, where the parameter file requested via the network is shown in the language HTML.

4. Method according to Claim 3, where the parameters are formatted as a table.

5. Method according to Claim 3, where a hierarchy in the configuration file is represented by a hierarchy in the syntax of the parameter file.

6. Method according to one of Claims 2 to 5, where the client program is used for displaying documents transmitted using HTTP.

## Revendications

1. Procédé de mise à jour des paramètres d'un programme client à exécuter sur un ordinateur client, comprenant les caractéristiques suivantes :
- les paramètres ont été enregistrés dans un fichier de configuration local, sur l'ordinateur client,
- l'exécution du programme client comprend une requête à un programme de service pour un fichier de paramètres, par l'intermédiaire d'un réseau de données, ladite requête comprenant une indication d'actualité.
- Si, d'après l'évaluation de l'indication d'actualité par le programme de service, il n'y a aucune actualité, le fichier de paramètres est communiqué au programme client qui, ensuite, transmet les paramètres obtenus dans le fichier de configuration propre.

2. Procédé selon la revendication 1, dans lequel le protocole utilisé est le protocole HTTP.

3. Procédé selon la revendication 2, dans lequel le fichier de paramètres appelé via le réseau est représenté dans le langage HTML.

4. Procédé selon la revendication 3, dans lequel les paramètres ont été formatés sous la forme de tableaux.

5. Procédé selon la revendication 3, dans lequel une hiérarchie du fichier de configuration est représentée par une hiérarchie dans la syntaxe du fichier de paramètres.

6. Procédé selon une des revendications 2 à 5, dans lequel le programme client sert à afficher des documents transmis via HTTP.
